# FASCICULE DE BREVET EUROPEEN

(11) **EP 0 851 147 B1**
(45) Date de publication et mention de la délivrance du brevet: **22.10.2003**
(21) Numéro de dépôt: 97403122.1
(22) Date de dépôt: 22.12.1997
(51) Int. Cl.: F16F 15/129, F16F 7/04

(54) **Rondelle de frottement et dispositif amortisseur de torsion, notamment pour véhicule automobile, mettant en oeuvre au moins une telle rondelle de frottement**
Reibungsring und Vorrichtung für Drehschwingungsdämpfung, insbesondere Kraftfahrzeuge die einen solchen Ring benutzen
Friction ring and torsional damping unit, especially for automotive vehicles, which makes use of such a friction ring.

(30) Priorité: 31.12.1996 FR 9616301
(43) Date de publication de la demande: 01.07.1998
(73) Titulaire: VALEO EMBRAYAGES s.a.s., 80009 Amiens Cedex 1 (FR)
(72) Inventeur: Lebas, Gilles, 92600 Asnieres (FR)
(74) Mandataire: Lemaire, Marc

(56) Documents cités:
- EP-A- 0 645 555
- DE-A- 3 918 222
- DE-A- 4 417 660
- GB-A- 2 284 247
- GB-A- 2 298 473
- US-A- 4 635 780
- US-A- 5 249 660

## Description

L'invention concerne les moyens de frottement à mettre en oeuvre entre deux parties susceptibles de déplacement entre elles, en vue par exemple d'un amortissement de ce déplacement.

Les deux parties peuvent par exemple appartenir à un dispositif amortisseur de torsion du type de ceux mis en oeuvre sur certains véhicules automobiles, tel que, par exemple, une friction d'embrayage, un double volant amortisseur, ou un embrayage de verrouillage pour dispositif d'accouplement hydraulique.

Il s'agit alors de parties coaxiales, qui, dans les limites d'un débattement angulaire déterminé, et à l'encontre de moyens élastiques à action circonférentielle, sont montées angulairement mobiles l'une par rapport à l'autre.

Mais les deux parties concernées peuvent également appartenir à d'autres types de dispositifs, et, par exemple, aux butées de débrayage dites autocentreuses également mises en oeuvre sur certains véhicules automobiles.

Il s'agit alors de parties qui sont montées mobiles l'une par rapport à l'autre transversalement à leurs axes, et qui sont à stabiliser l'une par rapport à l'autre.

Dans un dispositif amortisseur de torsion, par exemple, les moyens de frottement concernés par l'invention interviennent axialement entre au moins un élément lié en rotation à l'une des parties coaxiales de ce dispositif amortisseur de torsion et un élément lié en rotation à l'autre de celles-ci.

Susceptibles d'être calés en rotation sur l'un de ces éléments, ils portent axialement sur l'autre.

En pratique, ces moyens de frottement sont constitués par une ou plusieurs rondelles de frottement.

Celles-ci sont usuellement réalisées en des matériaux très divers, tels que, par exemple, matériau de friction, matière synthétique dite plastique, ou métal.

Mais, à ce jour, elles sont toujours plus ou moins planes.

Pour en contrôler l'efficacité, il est donc nécessaire de leur associer des moyens de charge propres à les soumettre axialement à une sollicitation élastique.

En pratique, ces moyens de charge sont usuellement constitués à ce jour par une rondelle élastique, en pratique métallique, telle que par exemple une rondelle Belleville ou une rondelle ondulée.

Ainsi, pour les deux fonctions, de frottement et de charge, à assurer, il est usuellement prévu, à ce jour, un couple de deux rondelles distinctes, au prix, notamment, d'un encombrement axial non négligeable pour l'ensemble et d'une complication du montage.

A partir de l'état de la technique connu du document GB-A-2 284 247 et conforme au préambule de la revendication 1, l'invention définie par toutes les caractéristiques de la revendication 1 a pour objet une rondelle de frottement permettant une surface de frottement ayant radialement toujours sensiblement la même amplitude; elle a encore pour objet tout dispositif, et en particulier tout dispositif amortisseur de torsion, mettant en oeuvre au moins une telle rondelle de frottement.

La rondelle de frottement suivant l'invention est en matière synthétique et comporte axialement une capacité de déformation élastique, tout en présentant les autres caractéristiques de la revendication indépendante 1.

Quoi qu'il en soit, la rondelle de frottement suivant l'invention est à même d'assurer par elle-même, par le coefficient de frottement qui lui est propre, la fonction de frottement recherchée, et, par sa capacité de déformation élastique, la fonction de charge à associer à cette fonction de frottement.

Elle est donc apte à se substituer isolément à une rondelle de frottement et à une rondelle élastique de type classique, au bénéfice d'un encombrement axial plus réduit.

Le montage se trouve également simplifié, et, le nombre de pièces à empiler axialement se trouvant réduit, il conduit avantageusement à moins de dispersion dans la charge.

Le coût de la rondelle de frottement suivant l'invention ne dépasse pas, par ailleurs, celui d'une rondelle de frottement en matière synthétique de type classique et de dimensions équivalentes.

Son coefficient de frottement, qui dépend de sa matière constitutive, reste avantageusement dans les standards en la matière.

La charge qu'elle induit, qui dépend de ce coefficient de frottement, dépend également de sa géométrie, et il est ainsi possible d'intervenir très aisément sur cette charge en fonction de cette géométrie.

Du fait, d'ailleurs, d'une réalisation par moulage, la géométrie de la rondelle de frottement suivant l'invention peut très aisément être adaptée à celle des éléments entre lesquels elle intervient.

Enfin, pour une même géométrie, et, donc, pour un même dispositif de moulage, il est possible d'obtenir des rondelles de frottement capables de charges différentes, en intervenant simplement sur la nature de leur matière constitutive.

Les objets de l'invention, leurs caractéristiques et leurs avantages, ressortiront d'ailleurs de la description qui va suivre, à titre d'exemple, en référence aux dessins schématiques annexés sur lesquels :
la figure 1 est une vue en élévation d'une rondelle de frottement suivant l'invention, suivant la flèche I de la figure 2 ;
la figure 2 en est une vue en coupe axiale, suivant la ligne brisée II-II de la figure 1 ;
la figure 3 reprend, à échelle supérieure, le détail de la figure 2 repéré par un encart III sur cette figure 2 ;
la figure 4 est un diagramme illustratif des caractéristiques de la rondelle de frottement suivant l'invention ;
la figure 5 est une vue en coupe axiale d'un dispositif amortisseur de torsion mettant en oeuvre au moins une rondelle de frottement suivant l'invention ;
la figure 6 reprend, à échelle supérieure, le détail de la figure 5 repéré par un encart VI sur cette figure 5 ;
la figure 7 est une vue analogue à celle de la figure 6, pour une variante de réalisation ;
la figure 8 est également une vue analogue à celle de la figure 6, pour une autre variante de réalisation ;
la figure 9 est une vue partielle en coupe axiale analogue à celle de la figure 3, pour une variante de réalisation de la rondelle de frottement suivant l'invention ;
la figure 10 est également une vue analogue à celle de la figure 3, pour une autre variante de réalisation de cette rondelle de frottement, représentée en place sur une rondelle de guidage.

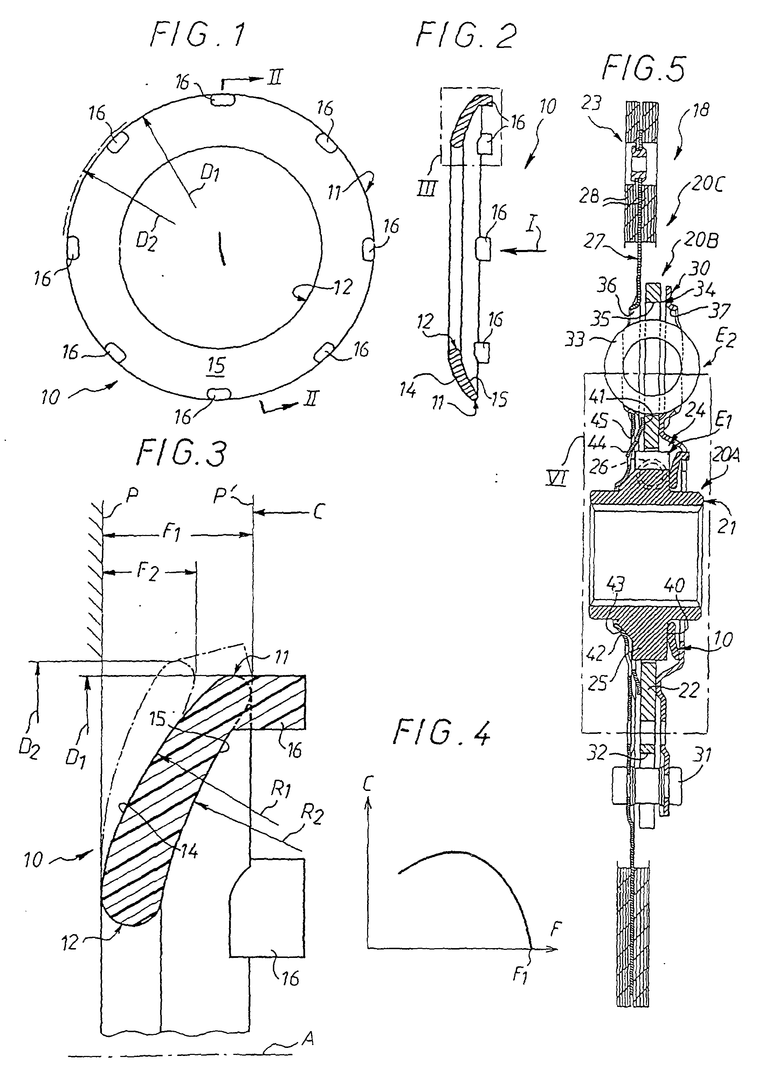

Suivant l'invention, la rondelle de frottement 10 représentée sur les figures 1 à 3 est en matière synthétique, et, conjointement, elle comporte axialement, c'est-à-dire perpendiculairement à son plan général moyen, une capacité de déformation élastique.

Par exemple, cette rondelle de frottement 10, qui est avantageusement obtenue par moulage, frittage ou autre, est en une quelconque des matières synthétiques dites plastiques du type des résines acétal, et notamment de celles connues sous les désignations commerciales suivantes : DELRIN, HOSTAFORM.

Si désiré, elle peut comporter une charge de fibres.

Sur les figures 1 à 3, sa capacité de déformation élastique résulte de ce que, à la manière d'une rondelle Belleville, sa périphérie externe 11 est décalée axialement par rapport à sa périphérie interne 12.

La rondelle de frottement 10 suivant l'invention s'inscrit donc dans ce cas tout entière entre deux plans P, P' qui, écartés l'un de l'autre, et parallèles entre eux, sont perpendiculaires à son axe A.

Ici, l'épaisseur de la rondelle de frottement 10 va en diminuant de sa périphérie interne 12 à sa périphérie externe 11.

En outre, de sa périphérie interne 12 à sa périphérie externe 11, sa surface extérieure 14 a, ici, en section transversale, un profil courbe convexe.

Ici, ce profil est circulaire.

Soit R1 son rayon.

De même, de sa périphérie interne 12 à sa périphérie externe 11, la surface intérieure 15 de la rondelle de frottement 10 a, ici, en section transversale, un profil courbe concave.

Ici, ce profil est également circulaire.

Soit R2 sont rayon.

Ici, les rayons R1, R2 sont différents, le rayon R2 du profil de la surface intérieure 15 étant supérieur à celui R1 du profil de la surface extérieure 14.

Sur les figures 1 à 3, la périphérie externe 11 de la rondelle de frottement 10 a, en section transversale, un profil arrondi.

De même, sa périphérie interne 12 a, ici, en section transversale, un profil arrondi.

Ici, ces profils sont l'un et l'autre arrondis en demi-cercle.

Mais, comme précédemment, leurs rayons sont différents, le rayon du profil de la périphérie interne 12 étant supérieur au rayon du profil de la périphérie externe 11.

Ici, ces profils se raccordent l'un et l'autre tangentiellement à la surface extérieure 14 et à la surface intérieure 15 de la rondelle de frottement 10.

Il résulte de ce qui précède que la section transversale de la rondelle de frottement 10 suivant l'invention a, ici, une allure en goutte d'eau, ou, plus exactement, en virgule.

Elle est donc plus épaisse à l'une de ses périphéries qu'à l'autre.

Ici, la rondelle de frottement 10 présente, d'un seul tenant, à l'une au moins de ses périphéries externe 11 et interne 12, au moins deux pions 16, qui, répartis circulairement, font saillie sensiblement axialement, c'est-à-dire sensiblement parallèlement à son axe A.

Sur les figures 1 à 3, ces pions 16 sont au nombre de huit, et ils sont régulièrement répartis circulairement autour de l'axe A.

Ici, ces pions 16 s'inscrivent tangentiellement dans le contour extérieur hors tout de la rondelle de frottement 10, et ils mordent donc légèrement sur la surface intérieure 15 de celle-ci.

En outre, ces pions 16 sont, ici, légèrement allongés circulairement, et, à leurs extrémités circonférentielles, ils ont un profil arrondi.

Ici, le plan P, qui est celui qui intervient du côté de la périphérie interne 12 de la rondelle de frottement 10, sera supposé constituer un plan d'appui fixe pour celle-ci.

Suivant la charge C appliquée au plan P', qui est celui intervenant du côté de la périphérie externe 11 de la rondelle de frottement 10, la flèche F de cette rondelle de frottement 10, c'est-à-dire la distance séparant le plan P' du plan P, varie.

Soit F1 la valeur de cette flèche au repos, c'est-à-dire pour une valeur nulle de la charge C, tel que représenté sur les figures 1 à 3.

Soit, corollairement, D1, le diamètre au repos de la rondelle de frottement 10 au niveau de son contour extérieur hors tout.

Pour des valeurs non nulles de la charge C, la flèche F diminue, cependant que le diamètre du contour extérieur hors tout de la rondelle de frottement 10 augmente.

Par exemple, pour une valeur F2 de cette flèche F, ce diamètre a une valeur D2 supérieure au diamètre D1 précédent, tel que schématisé en traits interrompus sur les figures 1 et 3.

Concomitamment, la surface extérieure 14 de la rondelle de frottement 10 se déroule tangentiellement suivant le plan P, grâce à son profil.

Il en résulte, avantageusement, que, du côté de ce plan P, la rondelle de frottement 10 intervient toujours de manière sensiblement tangentielle, en portant sur le plan d'appui correspondant suivant une surface de frottement ayant radialement toujours sensiblement la même amplitude.

Seul varie avec la charge C le rayon de la circonférence suivant laquelle s'exerce cette surface de frottement.

Il est ainsi possible d'avoir un bon contrôle du couple de frottement dû à la rondelle de frottement 10.

Lorsque la charge C est annulée, la rondelle de frottement suivant l'invention retrouve élastiquement d'elle-même sa configuration initiale, avec sa flèche F1 au repos et la valeur D1 correspondante pour le diamètre de son contour extérieur hors tout.

Le diagramme de la figure 4 donne à titre d'exemple une allure possible pour la courbe représentative de l'évolution de la flèche F en fonction de la charge C.

Ici, cette courbe s'apparente à celle d'une rondelle Belleville.

Mais d'autres allures de courbe sont également envisageables, suivant, notamment, la géométrie de la rondelle de frottement 10.

Lorsque, comme en l'espèce, la courbe s'apparente à celle d'une rondelle Belleville, on peut par exemple faire en sorte que, suivant cette géométrie, l'ensellement soit réduit, pour que la charge soit la plus constante possible dans la zone ce travail effective.

Le dispositif amortisseur de torsion 18 représenté sur les figures 4 et 5 est, à titre d'exemple, une friction d'embrayage pour véhicule automobile.

De manière connue en soi, ce dispositif amortisseur de torsion 18 comporte au moins deux parties coaxiales, qui, dans les limites d'un débattement angulaire déterminé, et à l'encontre de moyens élastiques à action circonférentielle, sont montées angulairement mobiles l'une par rapport à l'autre.

Ici, il comporte trois parties coaxiales 20A, 20B, 20C, à savoir, une partie 20A, qui comporte un moyeu 21 destiné à être solidarisé en rotation à un premier arbre, en pratique un arbre mené, une partie 20B, qui se réduit, ici, à un voile de moyeu 22, relativement épais, disposé annulairement autour du moyeu 21, dans la zone médiane de celui-ci, et une partie 20C, qui comporte un disque de friction 23 destiné à être solidarisé en rotation à un deuxième arbre, en pratique un arbre menant.

Par une denture 24, le voile de moyeu 22 de la partie 20B engrène avec jeu avec une collerette 25 que le moyeu 21 de la partie 20A présente radialement en saillie dans sa zone médiane.

Le jeu de la denture 24 détermine le débattement angulaire correspondant.

Ici, les moyens élastiques à action circonférentielle associés comportent au moins un ressort 26, qui, disposé entre deux dents de la denture 24, à la faveur d'une échancrure ménagée à cet effet dans celle-ci, s'étend sensiblement tangentiellement à une circonférence de l'ensemble.

Par exemple, deux ressorts 26 sont prévus, en positions diamétralement opposées l'un par rapport à l'autre.

Ici, la partie 20C comporte, d'une part, d'un premier côté du voile de moyeu 22 de la partie 20B, un voile de support 27, relativement mince, qui, portant, à sa périphérie, et sur l'une et l'autre de ses faces, des garnitures de frottement 28, constitue avec celles-ci le disque de friction 23, et, d'autre part, de l'autre côté du voile de moyeu 22 de la partie 20B, une rondelle de guidage 30.

Ici, le voile de support 27 du disque de friction 23 et la rondelle de guidage 30 sont, de place en place, reliés l'un à l'autre par des entretoises 31 traversant avec jeu des évidements 32 prévus à cet effet dans le voile de moyeu 22 de la partie 20B.

Par butée contre les extrémités circonférentielles des évidements 32, ces entretoises 31 définissent avec ceux-ci le débattement angulaire correspondant.

Ici, les moyens élastiques à action circonférentielle associés comportent au moins un ressort 33 qui, allongé sensiblement tangentiellement à une circonférence de l'ensemble, s'étend dans un logement 34 formé pour partie par une fenêtre 35 ménagée dans le voile de moyeu 22 de la partie 20B et pour partie dans des fenêtres 36 et 37 ménagées chacune respectivement dans le voile de support 27 du disque de friction 23 de la partie 20C et la rondelle de guidage 30 de celle-ci.

Bien entendu, plusieurs ressorts 33 sont prévus, en étant répartis circulairement autour de l'axe de l'ensemble.

Les parties 20A et 20B forment conjointement un premier étage d'amortissement E1, ou préamortisseur.

Corollairement, les parties 20B et 20C forment conjointement un deuxième étage d'amortissement E2.

Par construction, il est fait en sorte que les ressorts 33 de ce deuxième étage d'amortissement E2 aient une raideur très largement supérieure à celle des ressorts 26 du premier étage d'amortissement E1.

Il en résulte que, pour les faibles couples, seul intervient ce premier étage d'amortissement E1, et que les parties 20B, 20C se trouvent alors solidarisées en rotation par les ressorts 33.

Les dispositions qui précèdent sont bien connues par elles-mêmes, et, ne relevant pas en propre de la présente invention, elles ne seront pas décrites plus en détail ici.

De manière également connue, pour chacun des étages d'amortissement E1, E2 interviennent, axialement, entre au moins un élément lié en rotation à l'une des parties coaxiales correspondantes et un élément lié en rotation à l'autre de celles-ci, d'une part, des moyens de frottement, qui, susceptibles d'être calés en rotation sur l'un de ces éléments, portent axialement sur l'autre de ceux-ci, et, d'autre part, des moyens de charge, qui soumettent axialement ces moyens de frottement à une sollicitation élastique.

S'agissant du premier étage d'amortissement E1, ces moyens de frottement et ces moyens de charge sont, suivant l'invention, formés conjointement par au moins une rondelle de frottement 10 du type de celle décrite en référence aux figures 1 à 4.

Ici, seule une rondelle de frottement 10 est prévue, et les deux éléments entre lesquels elle intervient sont constitués, l'un, par le moyeu 21 de la partie 20A, et, plus précisément, par la collerette 25 de ce moyeu 21, et, l'autre, par la rondelle de guidage 30 de la partie 20C.

En effet, pour les faibles couples, pour lesquels intervient le premier étage d'amortissement E1, cette rondelle de guidage 30 se trouve solidarisée en rotation au voile de moyeu 22 de la partie 20B, comme indiqué précédemment, et tout se passe donc comme si elle appartenait, comme celui-ci, à sa partie 20B, qui est celle formant avec la partie 20A le premier étage d'amortissement E1 en question.

Ici, la rondelle de frottement 10 est calée en rotation sur la rondelle de guidage 30 et frotte sur le moyeu 21.

Mais une disposition inverse peut être envisagée, la rondelle de frottement 10 étant alors calée en rotation sur le moyeu 21 et frottant sur la rondelle de guidage 30.

Ici, les pions 16 de la rondelle de frottement 10 sont en prise avec des échancrures 39 de la rondelle de guidage 30, qui, prévues à cet effet à la périphérie interne de celle-ci, en étant réparties circulairement en conséquence, s'étendent sensiblement radialement en direction de l'axe de l'ensemble.

Conjointement, la rondelle de frottement 10 porte par sa surface extérieure 14 contre le flanc 40 correspondant de la collerette 25 du moyeu 21.

Ici, ce flanc 40 est droit.

Autrement dit, il s'étend sensiblement transversalement par rapport à l'axe de l'ensemble.

Ainsi qu'on le notera, la rondelle de frottement 10 suivant l'invention est avantageusement plus épaisse dans sa zone de frottement, ici contre le moyeu 21, et elle est avantageusement plus mince dans celle où elle présente des pions 16, c'est-à-dire dans sa zone de liaison en rotation, ici avec la rondelle de guidage 30, au bénéfice d'une certaine souplesse dans cette zone de liaison en rotation.

Ainsi qu'on le notera, également, grâce à sa configuration arrondie, la rondelle de frottement 10 suivant l'invention est avantageusement peu agressive, et, au bénéfice de son intégrité, son profil courbe lui évite avantageusement de risquer de frotter contre la partie de la collerette 25 du moyeu 21 par laquelle celle-ci engrène avec la denture 24 du voile de moyeu 22, et qui, elle, est relativement agressive.

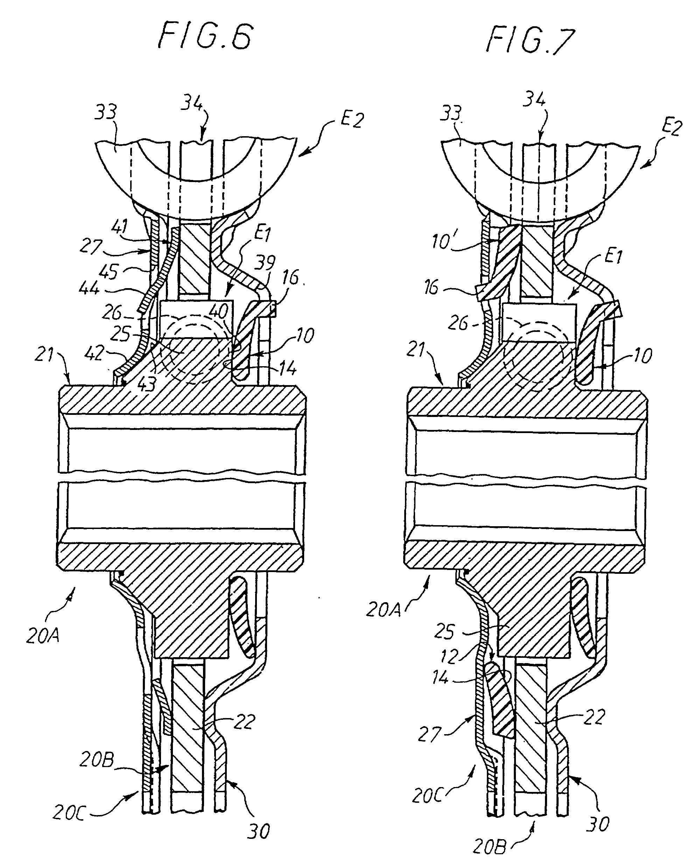

Sur les figures 5 et 6, les moyens de frottement et les moyens de charge du deuxième étage d'amortissement E2 sont formés conjointement pour partie par le voile de support 27 du disque de friction 23 de la partie 20C et pour partie par une rondelle 41 spécifique, et les deux éléments entre lesquels ils interviennent sont constitués l'un, par le moyeu 21 de la partie 20A, et, plus précisément, par la collerette 25 de ce moyeu 21, et, l'autre, par le voile de moyeu 22 de la partie 20B.

Ici, en effet, le voile de support 27 du disque de friction 23 comporte, à sa périphérie interne, une portion torique 42 par laquelle il porte contre une portée tronconique 43 que forme à sa racine la collerette 25 du moyeu 21.

Corollairement, la rondelle 41 s'étend entre le voile de moyeu 22 de la partie 20B et le voile de support 27 du disque de friction 23 de la partie 20C, et il présente, circulairement, de place en place, des pattes 44 par lesquelles il est calé en rotation sur ce voile de support 27, à la faveur d'évidements 45 prévus en correspondance sur celui-ci.

Par exemple, cette rondelle 41 est en métal.

Les pattes 44 sont d'un seul tenant avec elle.

Suivant la variante de la figure 7, les moyens de frottement et les moyens de charge du deuxième étage d'amortissement E2 sont, comme pour le premier étage E1, formés conjointement par une rondelle de frottement 10' suivant l'invention, c'est-à-dire par une rondelle de frottement 10' de même type que la rondelle de frottement 10 précédemment décrite.

Cette rondelle de frottement 10', comme la rondelle 41 qu'elle remplace, s'étend entre le voile de moyeu 22 de la partie 20B et le voile de support 27 du disque de friction 23 de la partie 20C.

Ici, cette rondelle de frottement 10' porte, par sa surface extérieure 14, contre le voile de moyeu 22, et, par ses pions 16, elle est calée en rotation sur le voile de support 27.

Au lieu d'être en saillie à sa périphérie externe 11, comme précédemment, ces pions 16 sont donc en saillie à sa périphérie interne 12.

Mais, comme précédemment, une disposition inverse est envisageable, la rondelle de frottement 10' étant calée en rotation sur le voile de moyeu 22 et portant sur le voile de support 27.

Ici, pour des raisons de place, la périphérie externe 11 de la rondelle de frottement 10' est d'ailleurs tronquée.

Pour le reste, les dispositions sont du même type que les précédentes.

Sur les figures 6 et 7, il y a un frottement acier/acier entre la rondelle de guidage 30 et le voile de moyeu 22, et entre le voile de support 27 et le moyeu 21.

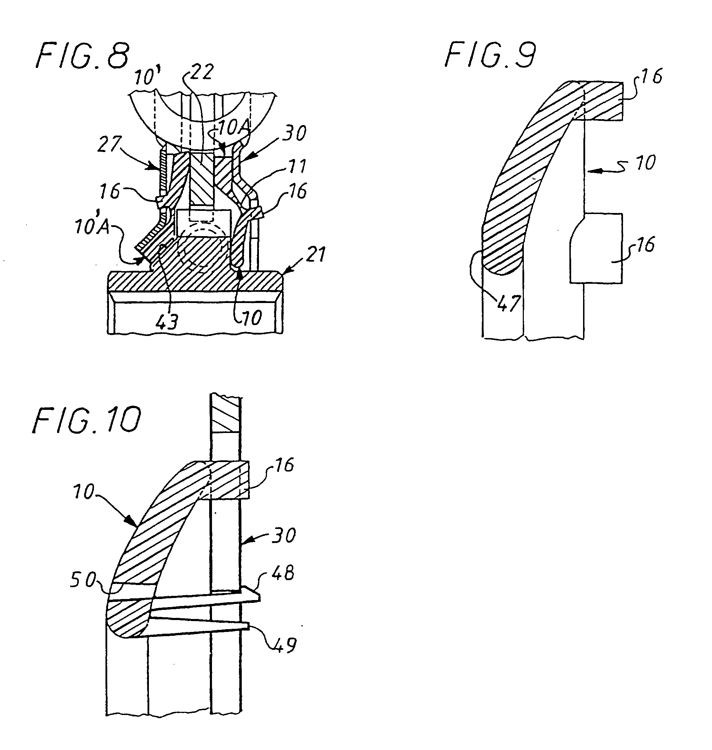

En variante, figure 8, pour le cas où un tel frottement est inadéquat, la rondelle de frottement 10 est d'un seul tenant avec une autre rondelle de frottement 10A, qui la prolonge radialement, ici du côté de sa périphérie externe 11, et qui, dépourvue de capacité axiale de déformation élastique, est simplement insérée entre la rondelle de guidage 30 et le voile de moyeu 22.

De même, la rondelle de frottement 10' est d'un seul tenant avec une autre rondelle de frottement 10'A, qui la prolonge radialement, ici du côté de sa périphérie interne 12, et qui, dépourvue de capacité axiale de déformation élastique, est simplement insérée entre le voile de support 27 et le moyeu 21, en portant contre la portée tronconique 43 de celui-ci.

Ici, la liaison entre chaque rondelle de frottement 10, 10' et la rondelle de frottement 10A, 10'A qui la prolonge radialement est quasi ponctuelle, au bénéfice d'une liberté axiale permettant de satisfaire à d'éventuels écarts de tolérance entre les diverses pièces en jeu sans perturber la charge assurée par cette rondelle de frottement 10, 10'.

Suivant la variante de réalisation de la figure 9, la rondelle de frottement 10 suivant l'invention présente, transversalement, dans sa zone de frottement, un méplat 47, pour augmenter sa surface de frottement et diminuer ainsi les usures.

Sur la figure 10, la rondelle de frottement 10 suivant l'invention présente, d'un seul tenant, de place en place le long de sa périphérie, ici la périphérie interne 12, opposée à celle sur laquelle font saillie les pions 16, des pattes d'encliquetage 48 qui s'étendent axialement, et par lesquelles elle est crochetée sur la rondelle de guidage 30.

Elle forme ainsi avantageusement un sous-ensemble avec cette dernière, ce qui facilite le montage.

Ici, chaque patte d'encliquetage 48 est doublée par un talon 49, pour en limiter le débattement, et, au voisinage d'une telle patte d'encliquetage 48, la rondelle de frottement 10 est traversée de part en part par un trou 50, pour des questions de moulage et de démoulage.

## Revendications

1. Rondelle de frottement en matière synthétique et comportant axialement une capacité de déformation élastique, dans laquelle, à la manière d'une rondelle Belleville, sa périphérie externe (11) est décalée axialement par rapport à sa périphérie interne (12), **caractérisée en ce que**, de sa périphérie interne (12) à sa périphérie externe (11), son épaisseur va en diminuant, que de sa périphérie interne (12) à sa périphérie externe (11), sa surface extérieure (14) a, en section transversale, un profil courbe convexe, et que de sa périphérie interne (12) à sa périphérie externe (11), sa surface intérieure (15) a, en section transversale, un profil courbe concave, lesdits profils courbes étant circulaires, leurs rayons (R1, R2) étant différents, le rayon (R2) du profil de la surface intérieure (15) étant supérieur au rayon (R1) du profil de la surface extérieure (14).

2. Rondelle de frottement suivant la revendication 1, **caractérisée en ce que** sa périphérie externe (11) a, en section transversale, un profil arrondi.

3. Rondelle de frottement suivant l'une quelconque des revendications 1 ou 2, **caractérisée en ce que** sa périphérie interne (12) a, en section transversale, un profil arrondi.

4. Rondelle de frottement suivant l'une quelconque des revendications 1 à 3, **caractérisée en ce qu'**elle est d'un seul tenant avec une autre rondelle de frottement (10A, 10'A) qui la prolonge radialement d'un côté d'une de ses périphéries.

5. Rondelle de frottement suivant l'une quelconque des revendications 1 à 4, **caractérisée en ce qu'**elle présente transversalement un méplat (47).

6. Rondelle de frottement suivant l'une quelconque des revendications 1 à 5, **caractérisée en ce qu'**elle présente, d'un seul tenant, à l'une au moins de ses périphéries externe (11) et/ou interne (12), au moins deux pions (16), qui, répartis circulairement, font saillie sensiblement axialement.

7. Rondelle de frottement suivant la revendication 6, **caractérisée en ce qu'**elle est plus épaisse dans sa zone de frottement et plus mince dans sa périphérie externe où elle présente des pions (16).

8. Rondelle de frottement suivant l'une quelconque des revendications 1 à 7, **caractérisée en ce qu'**elle présente, d'un seul tenant, de place en place, des pattes d'encliquetage (48).

9. Dispositif amortisseur de torsion, du genre comportant au moins deux parties coaxiales (20A, 20B, 20C), qui, dans les limites d'un débattement angulaire déterminé, et à l'encontre de moyens élastiques à action circonférentielle, sont montées angulairement mobiles l'une par rapport à l'autre, avec, intervenant axialement entre au moins un élément lié en rotation à l'une desdites parties coaxiales (20A, 20B, 20C) et un élément lié en rotation à l'autre de celles-ci, d'une part, des moyens de frottement, qui, susceptibles d'être calés en rotation sur l'un de ces éléments, portent axialement sur l'autre de ceux-ci, et, d'autre part, des moyens de charge, qui soumettent axialement ces moyens de frottement à une sollicitation élastique, **caractérisé en ce que** lesdits moyens de frottement et lesdits moyens de charge sont formés conjointement par au moins une rondelle de frottement (10, 10') conforme à l'une quelconque des revendications 1 à 8.

## Patentansprüche

1. Reibungsring aus synthetischem Material, der sich in Axialrichtung elastisch verformen lässt und dessen Außenumfang (11) wie bei einer Tellerfeder bezüglich seines Innenumfangs (12) axial versetzt ist, **dadurch gekennzeichnet, dass** sich seine Dicke von seinem Innenumfang (12) bis zu seinem Außenumfang (11) verringert, dass seine Außenfläche (14) von seinem Innenumfang (12) bis zu seinem Außenumfang (11) im Querschnitt ein konvexes gekrümmtes Profil aufweist und dass seine Innenfläche (15) im Querschnitt von seinem Innenumfang (12) bis zu seinem Außenumfang (11) ein konkaves gekrümmtes Profil aufweist, wobei die gekrümmten Profile kreisförmig sind und sich ihre Radien (R1, R2) unterscheiden, wobei der Radius (R2) des Profils der Innenfläche (15) größer ist als der Radius (R1) des Profils der Außenfläche (14).

2. Reibungsring nach Anspruch 1, **dadurch gekennzeichnet, dass** sein Außenumfang (11) im Querschnitt ein abgerundetes Profil aufweist.

3. Reibungsring nach Anspruch 1 oder 2, **dadurch gekennzeichnet, dass** sein Innenumfang (12) im Querschnitt ein abgerundetes Profil aufweist.

4. Reibungsring nach einem der Ansprüche 1 bis 3, **dadurch gekennzeichnet, dass** er mit einem anderen Reibungsring (10A, 10'A), der ihn radial von einer Seite eines seiner Umfänge verlängert, in einem Stück ausgebildet ist.

5. Reibungsring nach einem der Ansprüche 1 bis 4, **dadurch gekennzeichnet, dass** er in Querrichtung eine Abflachung (47) aufweist.

6. Reibungsring nach einem der Ansprüche 1 bis 5, **dadurch gekennzeichnet, dass** er an seinem Außenumfang (11) und/oder seinem Innenumfang (12) mindestens zwei Zapfen (16) einstückig aufweist, die kreisförmig verteilt sind und im Wesentlichen axial vorragen.

7. Reibungsring nach Anspruch 6, **dadurch gekennzeichnet, dass** er in seinem Reibungsbereich dicker ist und an seinem Außenumfang, wo er Zapfen (16) aufweist, dünner ist.

8. Reibungsring nach einem der Ansprüche 1 bis 7, **dadurch gekennzeichnet, dass** er hier und dort einstückig Rastnasen (48) aufweist.

9. Torsionsdämpfer jener Art, die mindestens zwei koaxiale Teile (20A, 20B, 20C) umfasst, die innerhalb der Grenzen eines bestimmten Winkelbereichs und entgegen elastischer Mittel mit umfangsgerichteter Wirkung relativ zueinander winkelförmig beweglich angebracht sind, mit einerseits axial zwischen mindestens einem drehfest mit einem der koaxialen Teile (20A, 20B, 20C) verbundenen Element und einem drehfest mit dem anderen der Teile verbundenen Element wirkenden Reibungsmitteln, die an einem dieser Elemente drehfest festgeklemmt werden können und axial an dem anderen davon anliegen, und andererseits Belastungsmitteln, die diese Reibungsmittel axial elastisch belasten, **dadurch gekennzeichnet, dass** die Reibungsmittel und die Belastungsmittel durch mindestens einen Reibungsring (10, 10') gemäß einem der Ansprüche 1 bis 8 gemeinsam ausgebildet sind.

## Claims

1. A friction ring of synthetic material, having a capacity for elastic axial deformation, wherein, in the manner of a Belleville ring, its- outer periphery (11) is offset axially with respect to its inner periphery (12), **characterised in that** its thickness diminishes from its inner periphery (12) to its outer periphery (11), **in that**, from its inner periphery (12) to its outer periphery (11), its outer surface (14) has a convex curved profile in transverse cross section, and **in that**, from its inner periphery (12) to its outer periphery (11), its inner surface (15) has a concave curved profile in transverse cross section, the said curved profiles being circular, their radii (R1, R2) being different, the radius (R2) of the profile of the inner surface (15) being greater than the radius (R1) of the profile of the outer surface (14).

2. A friction ring according to Claim 1, **characterised in that** its outer periphery (11) has a rounded profile in transverse cross section.

3. A friction ring according to Claim 1 or Claim 2, **characterised in that** its inner periphery (12) has a rounded profile in transverse cross section.

4. A friction ring according to any one of Claims 1 to 3, **characterised in that** it is in integral with another friction ring (10A, 10'A) which extends it radially on one side of one of its peripheries.

5. A friction ring according to any one of Claims 1 to 4, **characterised in that** it is formed with a transverse flat (47).

6. A friction ring according to any one of Claims 1 to 5, **characterised in that** it has, on at least one of its outer (11) and/or inner (12) peripheries, at least two integral spigots (16) which are spaced apart on a circle and project substantially axially.

7. A friction ring according to Claim 6, **characterised in that** it is thicker in its friction zone and thinner in its outer periphery, where it is formed with spigots (16).

8. A friction ring according to any one of Claims 1 to 7, **characterised in that** it has integral snap-fitting lugs (48) from place to place.

9. A torsion damping device, of the kind comprising at least two coaxial parts (20A, 20B, 20C), which, within the limits of a predetermined angular displacement and against the action of circumferentially acting resilient means, are mounted for circumferential movement of one with respect to the other, with, working axially between at least one element coupled in rotation to one of the said coaxial parts (20A, 20B, 20C) and an element coupled in rotation to the other one of the latter, on the one hand friction means which are arranged to be coupled in rotation on one of the said elements and bear axially on the other one of the latter, and on the other hand loading means which apply an axial elastic biasing force to the said friction means, **characterised in that** the said friction means and the said loading means consist, in combination by, of least one friction ring (10, 10') according to at least one of Claims 1 to 8.
